# EUROPÄISCHE PATENTSCHRIFT

(11) **EP 1 627 548 B1**
(45) Veröffentlichungstag und Bekanntmachung des Hinweises auf die Patenterteilung: **27.09.2006**
(21) Anmeldenummer: 05744536.3
(22) Anmeldetag: 25.04.2005
(51) Int. Cl.: H04Q 7/38

(54) **FESTSTELLUNG EINER SIGNALLAUFZEIT ZWISCHEN EINEM MOBILFUNKENDGERÄT UND EINER BASISSTATION**
DETERMINATION OF A SIGNAL PROPAGATION TIME BETWEEN A MOBILE RADIO TELEPHONE TERMINAL AND A BASE STATION
DETERMINATION D'UN TEMPS DE PARCOURS DE SIGNAL ENTRE UN TERMINAL DE TELEPHONIE MOBILE ET UNE STATION DE BASE

(30) Priorität: 19.05.2004 DE 102004025792
(43) Veröffentlichungstag der Anmeldung: 22.02.2006
(73) Patentinhaber: SIEMENS AKTIENGESELLSCHAFT, 80333 München (DE)
(72) Erfinder: KLÖPPEL, Silko, 13156 Berlin (DE); KÖHLER, Bert-Uwe, 14612 Falkensee (DE); SIMON, Carsten, 16761 Hennigsdorf-Niederneuend (DE)
(86) Internationale Anmeldenummer: PCT/DE2005/000773
(87) Internationale Veröffentlichungsnummer: WO 2005/115037

(56) Entgegenhaltungen:
- EP-A- 0 800 319
- WO-A-92/05672
- DE-A1- 10 116 798
- US-A- 5 924 034
- "Digital cellular telecommunications system (Phase 2+); Mobile radio interface layer 3 specification; Radio Resource Control (RRC) protocol (3GPP TS 44.018 version 5.15.0 Release 5); ETSI TS 144 018" ETSI STANDARDS, EUROPEAN TELECOMMUNICATIONS STANDARDS INSTITUTE, SOPHIA-ANTIPO, FR, Bd. 3-G2, Nr. V5150, 1. Mai 2004 (2004-05-01), XP014017686 ISSN: 0000-0001 in der Anmeldung erwähnt

## Beschreibung

Die Erfindung betrifft ein Verfahren zur Feststellung einer Signallaufzeit zwischen einem Mobilfunkendgerät, das beispielsweise auch ein Drahtlos-Modul ("Wireless Module") sein kann, und einer Basisstation eines Mobilfunknetzes im Mobilfunkendgerät, insbesondere zu dessen Lokalisierung.

Für den Aufbau einer Verbindung zwischen einem Mobilfunkendgerät und einer Basisstation eines Mobilfunknetzes ist es erforderlich, die Zeitverzögerung bei der Signalübermittlung zwischen beiden zu ermitteln. Diese Signallaufzeit wird beispielsweise in einem GSM-System zur Synchronisierung der Uplink-Bursts des Endgerätes auf das Zeitschlitzraster der Basisstation benötigt.

Hierzu wird in der Basisstation aus den von der Mobilstation ausgesendeten Access Bursts die Signallaufzeit bestimmt. Eine Kanalanforderungsnachricht, d. h. im GSM-System eine "Channel-Request-Meldung", wird als ein solcher Access Burst gesendet. Die Basisstation weist dann die Mobilstation an, ihren Aussendezeitpunkt entsprechend vorzuverlegen, indem die ermittelte Signallaufzeit in einer Kanalzuweisungsnachricht, im GSM-System die "Immediate-Assignment-Meldung", an die Mobilstation übertragen wird. Ein derartiger Meldungsaustausch ist in der ETSI TS 144 018 V5.15.0 Release 5 beschrieben.

Die Signallaufzeit wird im GSM-Umfeld durch den sogenannten Timing-Advance-Wert (TA-Wert) angegeben. Dieser ist gleichzeitig ein Maß für die Entfernung der Mobilstation von der jeweiligen Basisstation. Der TA-Wert kann somit beispielsweise als Basis für Selbstortungsverfahren der Mobilstation genutzt werden.

Die Lokalisierung eines Mobilfunkendgerätes in einem Mobilfunknetz bildet die Voraussetzung für die Realisierung der zahlreichen so genannten "Location Services". Dies sind Dienste, die auf unterschiedliche Weise von Informationen bezüglich der Position des Endgerätes bzw. des Gerätebenutzers Gebrauch machen. Hierzu zählen neben der automatischen Übermittlung der Position bzw. des Ortes im Falle eines Notrufs die positionsabhängige Vergebührung, positionsabhängige Verbindungsaufbauverfahren sowie die Positionsverfolgung etwa im Rahmen der Verkehrsüberwachung oder des Flottenmanagements.

Eines der einfachsten Lokalisierungsverfahren beruht darauf, die Zelle zu bestimmen, in der sich das Endgerät befindet. Hierdurch erhält man in den Kernbereichen von Großstädten, bei denen die Zellradien in Bereichen von einigen hundert Metern liegen, bereits verwertbare Angaben. In ländlichen Gebieten mit ihren großen Zellen sind Genauigkeiten im Bereich von mehreren Kilometern jedoch nicht ausreichend.

Genauere Verfahren setzen teure Zusatzeinrichtungen für das Endgerät voraus. Bei OTD("Observed Time Difference")-Verfahren ist die Mobilstation aufwendig dafür ausgebildet, die Differenz zwischen den Ankunftszeiten bestimmter Signale, die von mehreren Basisstationen abgestrahlt werden, zu bestimmen. Alternativ oder zusätzlich kann eine Mobilstation auch mit einem teuren GPS-Empfänger ausgestattet sein.

Andere Verfahren setzen Zusatzeinrichtungen im Mobilfunknetz voraus, was ebenfalls großen Aufwand bedeutet. So basieren viele ToA("Time of Arrival")-Verfahren darauf, an mehreren bekannten Orten die Ankunftszeiten eines von der Mobilstation ausgesandten Signals zu messen. Hierfür sind an zahlreichen Stellen im Netz sogenannte LMUs ("Location Messurement Units") zu platzieren.

Dem gegenüber kann bei Verfahren, die die Signallaufzeit zwischen Endgerät und Basisstation für die Abstandsbestimmung nutzen, auf teure Zusatzeinrichtungen im Netz verzichtet werden. Hierbei werden zur Lokalisierung des Mobilfunkendgerätes üblicherweise wenigstens drei von unterschiedlichen Basisstationen ermittelte TA-Werte herangezogen.

Aus der WO 92/05672 ist ein Verfahren zur Feststellung einer Signallaufzeit zwischen einem Mobilfunkendgerät und einer Basisstation eines Mobilfunknetzes bekannt. Die WO 92/05672 offenbart das Aussenden einer Kanalanforderungsnachricht von einem Mobilfunkgerät an eine Basisstation, das Erfassen einer Signallaufzeit zwischen dem Mobilfunkendgerät und der Basisstation in Reaktion auf die Kanalanforderungsnachricht, sowie das Rücksenden der Signallaufzeit an das Mobilfunkendgerät in einer Nachricht auf einem Kanalanforderungsbestätigungskanal.

Obwohl also im Prinzip einfache und unaufwendige Lokalisierungsverfahren zur Verfügung stehen, die vorteilhaft auf der Feststellung der Signallaufzeit im Endgerät basieren, ergibt sich genau hieraus auch ein wesentliches Problem.

Die Hauptaufgabe des oben geschilderten Austausches von Kanalanforderungs- und Kanalzuweisungsnachricht besteht nämlich nicht in der Bestimmung der Signallaufzeit und deren Übermittlung an die Mobilstation, sondern darin, für einen Verbindungsaufbau in der Basisstation mindestens einen Funkkanal für den weiteren Austausch von Nachrichten zu bestimmen und zu reservieren. Hierzu werden in der Kanalzuweisungsnachricht die physikalischen Eigenschaften des reservierten Kanals (z.B. Frequenz, Zeitschlitz, Unterkanalnummer) an die Mobilstation übermittelt.

Die Erfassung eines TA-Wertes erfolgt somit in der Basisstation im Zusammenhang mit dem gleichzeitigen Aufbau einer Verbindung über die Luftschnittstelle, genauer gesagt der Anforderung eines solchen Verbindungsaufbaus mit der Reservierung mindestens eines Signalisierungskanals (bei GSM: eines "Dedicated Control Channels") sowie eventuell eines weiteren Kanals, z.B. eines Sprachkanals.

Es besteht jedoch gar kein Bedarf an einer Kanalreservierung, wenn lediglich die Signallaufzeit in der Mobilstation festgestellt werden soll, etwa für ein endgerät-gestütztes Lokalisierungsverfahren. Nach Empfang der Kanalzuweisungsnachricht mit dem darin enthaltenen Wert der Signallaufzeit ist aus Sicht des Mobilfunkendgerätes das Ziel der Prozedur erreicht. In einem GSM-System geht die Mobilstation dann in den RR-Idle-Zustand über; der von der Basisstation reservierte Kanal wird nicht benötigt.

Die Freigabe des reservierten Kanals erfolgt frühestens nach einigen Sekunden, nämlich nachdem die Basisstation festgestellt hat, dass der reservierte Kanal nicht benutzt wird. In einem GSM-System ist ein typischer Wert bis zur Freigabe sechs Sekunden. Für diese Zeit steht der angeforderte Kanal anderen Mobilstationen zum Verbindungsaufbau nicht zur Verfügung. Es werden also bei diesem Vorgehen Netzressourcen verschwendet. Dieses Problem hat bisher die Akzeptanz des oben beschriebenen, an sich einfachen Lokalisierungsverfahrens behindert, und damit den Einsatz von Lokalisierungsverfahren insgesamt.

Es ist daher eine Aufgabe der vorliegenden Erfindung, ein Verfahren zur Feststellung einer Signallaufzeit zwischen einem Mobilfunkendgerät und einer Basisstation eines Mobilfunknetzes in dem Mobilfunkendgerät vorzuschlagen, bei dem einerseits möglichst bereits vorhandene, standardgemäße Prozeduren verwendet werden, das aber andererseits gegenüber dem Stand der Technik die Belastung von Netzwerkressourcen, insbesondere über die Luftschnittstelle, reduziert, sowie entsprechend ausgerüstete Mobilfunkendgeräte und Basisstationen vorzuschlagen.

Diese Aufgabe wird durch ein Verfahren mit den Merkmalen des anhängenden Anspruchs 1, ein Mobilfunkendgerät mit den Merkmalen des Anspruchs 9 sowie eine Basisstation mit den Merkmalen des Anspruchs 13 gelöst.

Der Zweck einer Kanalanforderungsnachricht besteht, wie der Name schon sagt, herkömmlich darin, einen Kanal für einen Verbindungsaufbau (über die Luftschnittstelle) anzufordern, damit dieser reserviert wird. Ein wesentlicher Gedanke der Erfindung besteht nun darin, die Kanalanforderungsnachricht , entgegen diesem bisherigen Verwendungszweck dazu zu verwenden, um an die Basisstation eine Laufzeitfeststellungsinformation zu übermitteln. Durch diese wird die Basisstation darüber informiert, dass lediglich eine Feststellung der Signallaufzeit in der Mobilstation durchzuführen ist, eine Kanalreservierung mithin nicht erforderlich ist.

Die Verwendung der Kanalanforderungsnachricht in dieser dem ursprünglichen Zweck der Nachricht diametral zuwiderlaufenden Weise ermöglicht eine überraschend einfache Lösung des oben beschriebenen Problems. Eine einfache Modifikation der standardgemäßen Kanalanforderungsnachricht ermöglicht nämlich die Einsparung bisher unnötigerweise reservierter Kanäle, d.h. von Netzwerkressourcen. Damit hat der Einsatz beispielsweise von auf der Feststellung von Signallaufzeiten in der Mobilstation basierender Lokalisierungsverfahren weit geringere Auswirkungen auf die Auslastung von Einrichtungen in Mobilfunknetzen. Infolge dessen steht zu Erwarten, dass das erfindungsgemäße Verfahren weit größere Akzeptanz und Unterstützung bei den Netzwerkbetreibern findet.

Konkret wird eine Weiterentwicklung eines Verfahrens zur Feststellung einer Signallaufzeit zwischen einem Mobilfunkendgerät und einer Basisstation eines Mobilfunknetzes im Mobilfunkendgerät, insbesondere zu dessen Lokalisierung, vorgeschlagen, bei dem
- eine Kanalanforderungsnachricht vom Mobilfunkendgerät erzeugt und an die Basisstation gesendet wird, wobei die Kanalanforderungsnachricht dafür vorgesehen ist, für den Aufbau einer Verbindung die Basisstation zu veranlassen, einen Kanal für die Übermittlung von weiteren Nachrichten zu bestimmen und diesen Kanal zu reservieren,
- in Reaktion auf die Kanalanforderungsnachricht in der Basisstation die Signallaufzeit erfasst wird, um für den weiteren Verbindungsaufbau eine Synchronisierung des Mobilfunkendgerätes auf das Zeitschlitzraster der Basisstation zu ermöglichen,
- eine Kanalzuweisungsnachricht von der Basisstation erzeugt und an das Mobilfunkendgerät gesendet wird, die dafür vorgesehen ist, die Werte von Kanalparametern des reservierten Kanals anzugeben, und in welcher der Wert der Signallaufzeit angegeben ist.

Die erfindungsgemäße Weiterentwicklung besteht darin, dass vom Mobilfunkendgerät eine Laufzeitfeststellungsinformation in die Kanalanforderungsnachricht eingefügt wird, um der Basisstation über die Kanalanforderungsnachricht zu signalisieren, dass keine Kanalreservierung, sondern nur eine Laufzeitfeststellung durchzuführen ist.

In bevorzugten Ausführungsformen des erfindungsgemäßen Verfahrens wird die Kanalanforderungsnachricht von der Basisstation auf ein Vorliegen der Laufzeitfeststellungsinformation hin ausgewertet, wobei in Reaktion auf ein positives Auswertungsergebnis von der Basisstation kein Kanal reserviert wird. Hierfür ist nur eine minimale Zusatzfunktionalität in der Basisstation erforderlich, um sicherzustellen, dass ein Aufruf einer Kanalreservierungsfunktionalität unterbleibt, und lediglich die Bestimmung der Signallaufzeit erfolgt. Eine veränderte Bearbeitung in weiteren Netzwerkeinrichtungen, etwa einer MSC in einem GSM-Netz ist nicht erforderlich.

In weiteren Ausgestaltungen des erfindungsgemäßen Verfahrens wird die Laufzeitfeststellungsinformation als vorgegebener Parameterwert eines Parameters der Kanalanforderungsnachricht eingefügt, wobei der Parameter mindestens einen weiteren Wert annehmen kann, der sich nicht auf die Laufzeitinformation bezieht. Hierdurch wird eine Änderung des Nachrichtenformats einer standardgemäßen Nachricht überflüssig, etwa der Channel-Request-Nachricht in einem GSM-System. Es wird lediglich einem Parameter, dessen erlaubte Werte durch ein Mehr-Bit-Feld in der Kanalanforderungsnachricht repräsentiert werden, ein weiterer zugelassener, d.h. bedeutungsvoller Wert hinzugefügt. Hierzu wird vorzugsweise ein Wert bzw. eine Bitkombination verwendet, der bzw. die bisher unbenutzt war (im Standard gewöhnlich bezeichnet durch "reserved for future use"). Somit sind nur minimale Änderungen zur Erzeugung und Auswertung der Kanalanforderungsnachricht erforderlich.

In einer weiteren Ausgestaltung dieser Ausführungsform wird der Parameter der Kanalanforderungsnachricht von der Basisstation ausgewertet, um die Art des zu reservierenden Kanals zu bestimmen. Dieser Parameter bietet sich an, da er bei der Auswertung in der Basisstation herkömmlich eng mit dem Aufruf einer Kanalreservierungsfunktionalität verknüpft sein dürfte. Die erfindungsgemäßen Modifikationen sind unter weitgehender Wieder- bzw. Weiterverwendung bekannter Funktionalitäten besonders einfach zu implementieren. Im GSM-Standard ist dieser Parameter der "Establishment Cause", der durch ein Oktett in der Change-Request-Nachricht angegeben wird. Hier liegen mehrere Bitkombinationen vor, die bisher nicht verwendet werden, es ist also jedenfalls möglich, eine Bitkombination als Parameterwert für die erfindungsgemäße Laufzeitfeststellungsinformation zu reservieren.

In weiteren Ausführungsformen des erfindungsgemäßen Verfahrens wird durch das Mobilfunkendgerät der Wert der Signallaufzeit aus der Kanalzuweisungsnachricht entnommen, nicht jedoch die Werte der Kanalparameter. Da erfindungsgemäß die Basisstation keine Kanalreservierung durchführt, können auch keine sinnvollen Werte der Kanalparameter in der Nachricht enthalten sein. Das Ignorieren der Parameter vereinfacht und beschleunigt somit die Bearbeitung der Nachricht im Mobilfunkendgerät gegenüber der herkömmlichen Bearbeitung, ohne dass hierdurch Nachteile entstehen.

In nochmals weiteren Ausführungsformen des erfindungsgemäßen Verfahrens werden durch die Basisstation Kanalparameter mit zufälligen oder in der Basisstation fest vorgegebenen Werten in die Kanalzuweisungsnachricht eingefügt. Hierdurch können die zur Erstellung einer erfindungsgemäßen Kanalzuweisungsnachricht benötigten Ressourcen in der Basisstation minimiert werden, da die Kanalparameter in der Mobilstation ohnehin nicht benutzt, vorzugsweise gar nicht erst ausgelesen werden.

In anderen Ausführungsformen des erfindungsgemäßen Verfahrens werden bei der Auswahl der oder jeder Basisstation, an welche die Kanalanforderungsnachricht gesendet wird, die im Mobilfunkendgerät implementierten Zell- und/oder Netz-Auswahlkriterien nicht herangezogen. Mit anderen Worten wird von dem Mobilfunkendgerät die Kanalanforderungsnachricht an die Basisstation gesendet, obwohl die im Mobilfunkendgerät implementierten Zell- und/oder Netz-Auswahlkriterien einen Verbindungsaufbau über diese Basisstation nicht zulassen. Hierbei können auch solche Basisstationen, die bei herkömmlichen Verfahren zur Laufzeitfeststellung im Endgerät nicht genutzt werden können, herangezogen werden. Es erhöht sich somit die Zahl der zur Verfügung stehenden Basisstationen und entsprechend beispielsweise die Genauigkeit der Lokalisierung des Mobilfunkendgerätes.

In nochmals anderen Ausführungsformen des erfindungsgemäßen Verfahrens übermittelt die Basisstation eine Unterstützungsinformation an das Mobilfunkendgerät, die angibt, dass die Basisstation ausgebildet ist, um nur eine Laufzeiterfassung ohne Kanalreservierung durchzuführen. Hierbei ist die Basisstation zur Durchführung des erfindungsgemäßen Verfahrens ausgebildet. Die Mobilstation kann diese Unterstützungsinformation auswerten und beispielsweise für Laufzeitfeststellungen die Basisstation bevorzugt heranziehen, oder gerade nicht heranziehen, wenn diese nicht zur Durchführung des ressourcenschonenden erfindungsgemäßen Verfahrens ausgebildet ist.

Die Vorteile und Zweckmäßigkeiten erfindungsgemäß ausgebildeter Mobilfunkendgeräte und netzwerkseitiger Einrichtungen ergeben sich aus den Vorteilen und Zweckmäßigkeiten erfindungsgemäßer Verfahren.

Insbesondere ist ein herkömmliches Mobilfunkendgerät bzw. eine herkömmliche Mobilstation, die auch als Drahtlos-Modul vorliegen kann, erfindungsgemäß derart weitergebildet, dass ein Modul zur Erzeugung einer Kanalanforderungsnachricht dazu ausgebildet ist, um in Reaktion auf einen Befehl zur Erzeugung einer Nachricht von einer Einheit zur Feststellung der Laufzeit eine Laufzeitfeststellungsinformation in eine Kanalanforderungsnachricht einzufügen, um der oder jeder adressierten Basisstation zu signalisieren, dass keine Kanalreservierung, sondern nur eine Laufzeitfeststellung durchzuführen ist.

Gemäß der Erfindung wird die Weiterentwicklung einer herkömmlichen Basisstation, insbesondere eines Moduls für die Kanalzuweisung, derart vorgeschlagen, dass das Modul in Reaktion auf eine Auswertung einer solchen Kanalanforderungsnachricht, die eine Laufzeitfeststellungsinformation enthält, in einem Modul zur Auswertung der Kanalanforderungsnachricht keine Reservierung eines physikalischen Kanals in einem Kanalbelegungsspeicher vornimmt, wobei die Laufzeitfeststellungsinformation angibt, dass keine Kanalreservierung, sondern nur eine Laufzeitfeststellung durchzuführen ist.

Weitere Aspekte, Vorteile und Zweckmäßigkeiten der Erfindung werden aus der nachfolgenden detaillierten Beschreibung eines Ausführungsbeispiels anhand der Figuren deutlich. Von diesen zeigt:
Fig. 1 eine Anordnung mit erfindungsgemäß ausgebildeter Mobil- und Basisstation,
Fig. 2 ein vereinfachtes Nachrichtenflussdiagramm zur Veranschaulichung des erfindungsgemäßen Verfahrensablaufs zwischen der Mobil- und Basisstation aus Fig. 1,
Fig. 3 einen Verfahrensablauf wie in Fig. 2, jedoch gemäß dem Stand der Technik.

In den Figuren werden gleiche und gleichwirkende Elemente mit gleichen Bezugszeichen versehen.

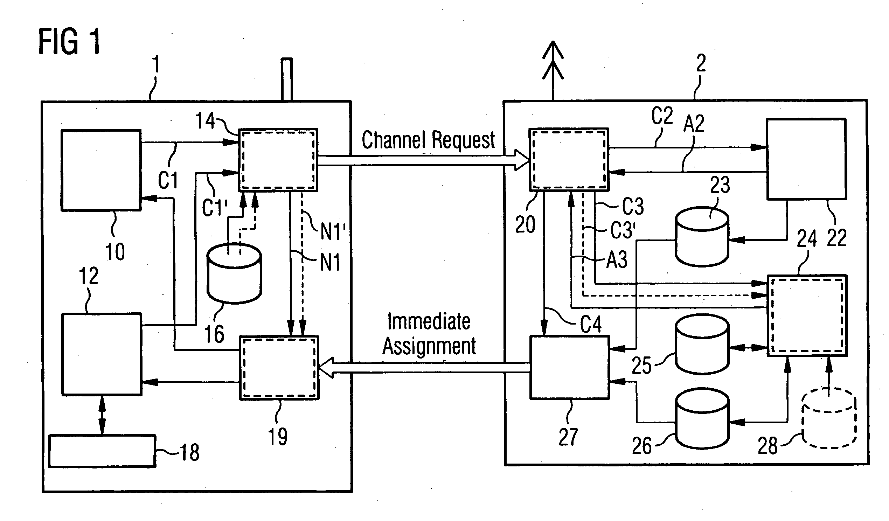

Fig. 1 zeigt in Form eines funktionalen Blockschaltbildes die Komponenten eines Mobilfunkendgerätes 1 sowie einer Basisstation 2, soweit sie für das Verständnis der Erfindung wesentlich sind. Hierbei ist die Übermittlung von stationsinternen Befehlen und Bestätigungen jeweils gestrichelt bzw. durchgezogen eingezeichnet, soweit das herkömmliche bzw. das erfindungsgemäß weiterentwickelte Verfahren betroffen ist. Funktionale Einheiten, die zur Durchführung der Erfindung gegenüber dem Stand der Technik modifiziert wurden, sind mit doppelter Umrandung gezeichnet.

Die Basisstation 2 ist eine von einer Vielzahl von Einrichtungen eines nicht weiter gezeigten Mobilfunknetzwerkes, das auf dem GSM-Standard basiert. Entsprechend ist die Mobilstation 1 für den Aufbau von Verbindungen über dieses GSM-Netz ausgebildet.

Bei der Beschreibung der Komponenten wird zunächst auf den herkömmlichen Ablauf eines Verfahrens zur Feststellung der Signallaufzeit in dem Endgerät 1 eingegangen. Die erfindungsgemäße Weiterentwicklung des Verfahrens wird im Anschluss diskutiert.

In der Mobilstation 1 liegen eine Verbindungsaufbaueinheit 10 sowie eine Laufzeitfeststellungseinheit 12 vor, wie dies herkömmlich bekannt ist. Die Verbindungsaufbaueinheit 10 wird durch weitere, nicht gezeigte Einheiten des Endgerätes 1 getriggert, um den Aufbau einer Verbindung einzuleiten (und ggf. um weitere verbindungsbezogene Aufgaben wahrzunehmen, etwa den späteren Verbindungsabbau). Für den Aufbau einer Verbindung werden durch die Aufbaueinheit 10 zahlreiche Prozesse angestoßen bzw. durchgeführt, die dem Fachmann bekannt sind und daher hier nicht weiter diskutiert werden. Wesentlich im Zusammenhang mit der Erfindung ist, dass die Verbindungsaufbaueinheit 10 einen Nachrichtenerzeugungsbefehl C1 an ein Kanalanforderungsnachricht-Erzeugungsmodul 14 sendet.

Die Laufzeitfeststellungseinheit 12 wird von einer schematisch eingezeichneten Anwendung 18 angesteuert. Bei dieser handelt es sich (in diesem Ausführungsbeispiel) um eine Java-Applikation für die Lokalisierung des Endgerätes. Die Applikation 18 fordert hierfür von der Einheit 12 mindestens drei Timing-Advance-Werte an. Von weiteren, nicht gezeigten Einheiten des Endgerätes 1 fordert die Applikation 18 ferner die geografischen Positionen der Basisstationen an, von denen die TA-Werte festgestellt wurden. Daraus berechnet die Anwendung 18 schließlich die geografischen Koordinaten des Endgerätes 1.

Damit die Anwendung 18 eine Lokalisierung durchführen kann, übermittelt die Einheit 12 in einem Steuerbefehl C1' eine dem Befehl C1 entsprechende Anweisung an das Nachrichtenerzeugungsmodul 14, allerdings mit dem Unterschied, dass nicht von einer, sondern von drei Basisstationen jeweils einen TA-Wert anzufordern ist. Dementsprechend entnimmt das Modul 14 dem Trägerfrequenzspeicher 16 die drei empfangsstärksten Basisstationen, bzw. deren Frequenzträger (aus Klarheitsgründen wird nur der Nachrichtenaustausch zur Basisstation 2 behandelt).

Die endgeräte-internen Befehle C1 und C1' sind bis auf die Angabe zur Anzahl zu erstellender Channel-Request-Nachrichten exakt gleich aufgebaut, d.h. sie unterscheiden sich ansonsten lediglich durch die Einheit (12 oder 10), von der sie erzeugt und abgesendet werden.

Herkömmlich reagiert das Modul 14 hierbei auf den Befehl C1 wie den Befehl C1' in genau gleicher Weise mit der Erzeugung eines bzw. mehrerer Channel Requests. Hierzu greift das Modul 14 auf einen Trägerfrequenzspeicher 16 zu. In diesem sind die Trägerfrequenzen gespeichert, die am momentanen Ort des Endgerätes 1 im Rahmen des verwendeten GSM-Standards empfangen werden. Hier sind auch diejenigen Trägerfrequenzen von Basisstationen gespeichert, deren Empfangsstärke nach den GSM-Zellauswahlkriterien (beispielsweise dem sog. "C1-Kriterium") nicht verwendet werden dürfen. Ferner können Basisstationen mehrerer Mobilfunknetze gespeichert sein, die am Ort des Endgerätes 1 verfügbar sind. In einer Ausgestaltung des geschilderten Beispiels könnte das Endgerät statt nur für ein bestimmtes GSM-Netz etwa auch für verschiedene GSM-Unterstandards geeignet sein (GSM 900, 1800, PCM 1900) oder auch für die Kommunikation mit UMTS-Netzen ausgebildet sein. Somit könnten die Trägerfrequenzen der entsprechenden Basisstationen ebenfalls gespeichert vorliegen.

Die Trägerfrequenzen der einzelnen Basisstationen, genauer gesagt der BTS-Einrichtungen der Basisstationen, sind in dem Speicher 16 nach abnehmender Empfangsfeldstärke geordnet. Sofern nicht etwa Prioritätskriterien dem entgegenstehen, wählt das Modul 14 als Adressaten für die zu erstellende Channel-Request-Nachricht herkömmlich diejenige/n Basisstation/en aus, dessen Frequenzträger am stärksten empfangen wird/werden.

Ferner liegt im Endgerät 1 ein Kanalzuweisungsnachricht-Auswertungsmodul 19 vor, das weiter unten genauer beschrieben wird.

Die Basisstation 2 verfügt über ein Kanalanforderungsnachricht-Auswertungsmodul 20. Dieses wertet die von der Mobilstation 1 empfangene Channel-Request-Nachricht aus, wie dies dem Fachmann bekannt ist. Erfindungsrelevant ist hierbei insbesondere, dass das Modul 20 einen Signallaufzeit-Messbefehl C2 an ein Signallaufzeit-Messmodul 22 sendet. Dieses vermisst den im Rahmen der Channel-Request-Nachricht empfangenen Access Burst und ermittelt daraus den Timing-Advance-Wert, d.h. die Signallaufzeit zwischen Endgerät 1 und Basisstation 2. Den TA-Wert speichert das Modul 22 in einem Signallaufzeit-Speicher 23. Zugleich übermittelt das Modul 22 eine Bestätigung A2 an das Modul 20, um anzugeben, dass der TA-Wert in dem Speicher 23 zum Abruf zur Verfügung steht.

Herkömmlich übermittelt das Modul 20 in Reaktion auf den Empfang eines Channel Request weiterhin einen Kanalzuweisungsbefehl C3 an ein Kanalzuweisungsmodul 24. Dieses bestimmt einen freien Kanal für den Verbindungsaufbau zwischen Endgerät 1 und Basisstation 2 über die Luftschnittstelle durch Zugriff auf einen Kanalbelegungsspeicher 25, in dem die insgesamt verfügbaren Kanäle mit ihrem Belegungsstatus - reserviert oder frei - gespeichert sind.

Das Modul 24 wählt nach einem vorgegebenen, bekannten Algorithmus einen freien Kanal aus und trägt für diesen in den Speicher 25 den Status "reserviert" ein. Die physikalischen Parameter des reservierten Kanals werden in einem Kanalparameter-Speicher 26 gespeichert. Konkret handelt es sich in dem hier geschilderten Beispiel um die Reservierung eines SDCCH-Kanals (weitere Erläuterungen hierzu folgen weiter unten). Die Kanalreservierung wird beendet durch die Übergabe einer Bestätigung A3 an das Modul 20, die angibt, dass die Kanalreservierung abgeschlossen ist und Kanalparameter in dem Speicher 26 zum Abruf bereitstehen.

In Reaktion auf den Empfang der Bestätigung A2 und A3 übermittelt das Auswertungsmodul 20 einem Kanalzuweisungsnachricht-Erzeugungsmodul 27 einen Nachrichtenerzeugungsbefehl C4. Dadurch wird das Nachrichtenerzeugungsmodul 27 angewiesen, den Wert für die Signallaufzeit aus dem Speicher 23 sowie die Werte der Kanalparameter des reservierten Kanals aus dem Speicher 26 zu entnehmen und in eine GSM-Kanalzuweisungsnachricht einzufügen. Diese Immediate-Assignment-Nachricht wird sodann an das Endgerät 1 übermittelt.

Das Kanalzuweisungsnachricht-Auswertungsmodul 19 entnimmt der von der Basisstation 2 in Reaktion auf den Channel Request gesendeten Immediate-Assignment-Nachricht die Parameter des in der Basisstation 2 reservierten Kanals für den Verbindungsaufbau sowie den ebenfalls mitgelieferten TA-Wert. Das Modul 19 leitet in Abhängigkeit von dem internen Steuerbefehl N1 vom Nachrichtenerzeugungsmodul 14 die entnommenen Kanalparameter und den TA-Wert an die Verbindungsaufbaueinheit 10 und/oder den entnommenen TA-Wert an die Laufzeitfeststellungseinheit 12 weiter. Der Befehl N1 wird unten im Zusammenhang mit der Erfindung genauer diskutiert werden.

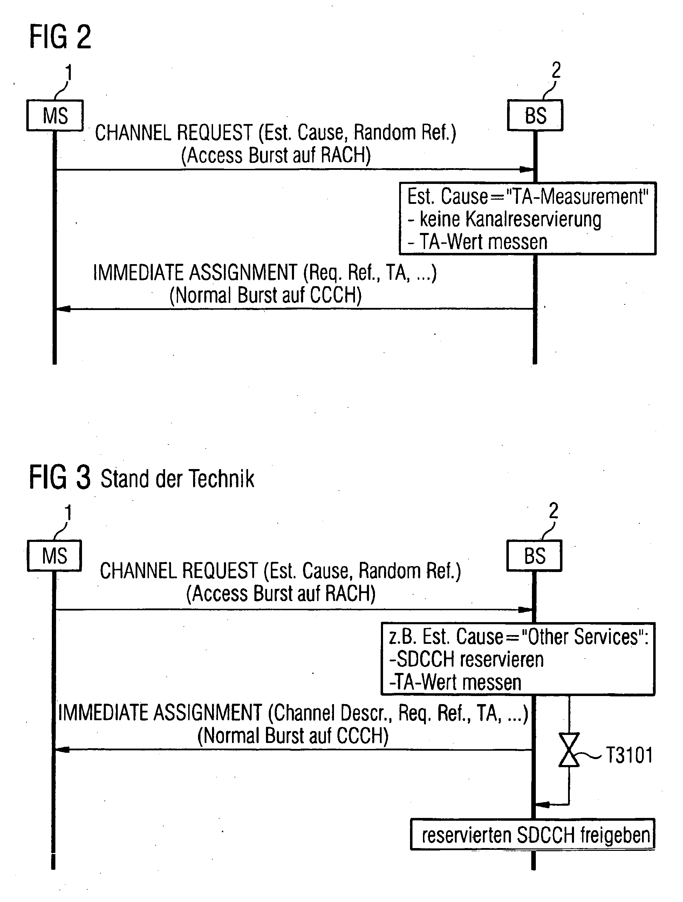

Der bisher geschilderte Ablauf entspricht einem herkömmlichen Kanalanforderungsverfahren, so wie es auch für die Feststellung der Signallaufzeit im Endgerät 1, genauer der Feststellungseinheit 12, verwendet wird. Der Ablauf gemäß dem Stand der Technik ist ebenfalls in Fig. 3 in Form eines Nachrichtenflussdiagramm gezeigt. Die vom Endgerät 1 an die Basisstation 2 gesendete Channel-Request-Nachricht wird auf dem Random Access Channel (RACH) gesendet. Die Nachricht enthält eine "Random Reference" zur Identifizierung der Mobilstation 1 gegenüber der Basisstation 1. Details zum Channel Request (wie auch zum Immediate Assignment) sind etwa in der 3GPP TS 44.018 beschrieben.

Ferner ist gemäß dem GSM-Standard ein "Establishment Cause" Teil dieser Nachricht. Da in der Mobilstation 1 lediglich die Feststellung der Signallaufzeit durchzuführen ist, kann ein beliebiger Establishment Cause gewählt werden. In dem in der Fig. 3 gezeigten Beispiel ist der Grund "Other Procedures" gewählt, entsprechend einer Bitkombination 0001xxxx in dem entsprechenden Feld der Nachricht.

In Reaktion auf die empfangene Anforderungsnachricht, genauer dessen Establishment Cause, wird in der Basisstation 2 durch das Nachrichtenauswertungsmodul 20 die Reservierung mindestens eines Kanals getriggert. Je nach Anforderung kann es sich um verschiedene sog. "Dedicated Channels" handeln, z.B. einen TCH ("Traffic Channel", Nutzdatenkanal) oder einen SDCCH ("Stand alone dedicated Control Channel", Signalisierungskanal).

In dem hier geschilderten Beispiel wird die Reservierung eines Signalisierungskanals getriggert, nämlich eines SDCCH-Kanals. Weiterhin wird der GSM-Timer T3101 gestartet, der angibt, wie lange der SDCCH-Kanal für die Mobilstation 1 reserviert ist. In diesem Ausführungsbeispiel beträgt der Timer sechs Sekunden. Die Freigabe erfolgt erst nach Ablauf des Timers T3101 und nachdem die Basisstation festgestellt hat, dass der reservierte Kanal nicht benutzt wurde. Um Mobilstationen für den Verbindungsaufbau Zeit zu geben und um eventuellen Übermittlungsschwierigkeiten über die Luftschnittstelle Rechnung zu tragen, ist der Timer T3101 üblicherweise auf einen Wert von einigen Sekunden eingestellt.

Zusätzlich wird, wie bereits oben geschildert, die Bestimmung des TA-Wertes (in dem Signallaufzeit-Messmodul 22) der Basisstation 2 angestoßen. Nach Bestimmung des TA-Wertes und Reservierung des SDCCH-Kanals wird ein Immediate Assignment mit Kanalbeschreibung sowie TA-Wert von der Basisstation 2 an das Mobilfunkendgerät 1 zurückgesendet. Diese Sendung erfolgt über den CCH ("Common Control Channel"). Für die weitere Kommunikation zwischen Mobilstation 1 und Basisstation 2 soll dann der von der Basisstation 2 zugewiesene SDCCH benutzt werden.

Da die Mobilstation 1 aber nur den TA-Wert messen will, geht sie nach Empfang des Immediate Assignment und damit des TA-Wertes wieder in den RR-Idle-Zustand über. Der von der Basisstation 2 reservierte SDCCH-Kanal wird also gar nicht benötigt.

In Fig. 3 ist sehr deutlich das Problem bei diesem herkömmlichen Verfahren zur Feststellung der Signallaufzeit im Mobilfunkendgerät zu erkennen: Der Timer T3101 läuft erst nach einer sehr langen Zeitspanne ab, verglichen mit typischen Verbindungsaufbau-Vorgängen, die auf Zeitskalen von 100 Millisekunden ablaufen. Während dieser Zeitspanne steht der reservierte SDCCH-Kanal nicht für den Verbindungsaufbau anderer Mobilfunkstationen zur Verfügung. Würden Lokalisierungsdienste in Mobilstationen in großem Umfang eingesetzt, würde daraus eine entsprechende Verschwendung von Netzressourcen resultieren. Anders ausgedrückt, die Netzwerkbetreiber müssten ein erhebliches Over-Provisioning gegenüber einem bisher üblichen Netzausbau durchführen, um eine gegebene Anzahl von Endgeräten nun zusätzlich mit Lokalisierungsdiensten unterstützen zu können.

Unter erneutem Bezug auf Fig. 1 wird jetzt das erfindungsgemäße Verfahren geschildert. Hierbei wird unterstellt, dass die doppeltumrandeten funktionalen Komponenten nunmehr erfindungsgemäß ausgebildet sind, wie im Detail beschrieben werden wird. Die einfach umrandeten Einheiten bzw. Module bleiben gegenüber herkömmlichen Komponenten unverändert.

Dieses beginnt damit, dass die Laufzeitfeststellungseinheit 12, getriggert durch die Java-Applikation 18, wie herkömmlich einen Nachrichtenerzeugungsbefehl C1' an das Nachrichtenerzeugungsmodul 14 übermittelt.

Das Modul 14 ist erfindungsgemäß ausgebildet, um zu erkennen, dass der Befehl C1' von der Einheit 12, nicht aber von der Einheit 10 stammt. In Reaktion hierauf fügt das Modul 14 in die Channel-Request-Nachricht als Establishment Cause ein "TA-Measurement" ein. Hierfür wird der nach dem gegenwärtigen Standard ungenutzte ("reserved for future use") Binärwert 01100x01 verwendet.

Das Modul 14 ist noch in einem anderen Aspekt weiterentwickelt: Damit die Anwendung 18 eine Lokalisierung durchführen kann, übermittelt die Einheit 12 in dem Steuerbefehl C1' die Anweisung an das Nachrichtenerzeugungsmodul 14, von drei Basisstationen jeweils einen TA-Wert anzufordern (wie weiter oben bereits geschildert). Dementsprechend entnimmt das Modul 14 dem Trägerfrequenzspeicher 16 die drei empfangsstärksten Basisstationen, bzw. deren Frequenzträger (aus Klarheitsgründen wird nur der Nachrichtenaustausch zur Basisstation 2 behandelt).

Bei den Basisstationen muss es sich erfindungsgemäß nicht um Basisstationen des Mobilfunknetzes der Basisstation 2 handeln, bei dem das Endgerät 1 angemeldet ist. Obwohl derartige Basisstationen, oder auch Basisstationen mit einem schwachen Empfangspegel am Ort des Endgerätes 1 gemäß den Zell- und Netzauswahlkriterien des GSM-Netzes nicht für einen Verbindungsaufbau in Frage kommen, erstellt und sendet das Modul 14 dennoch in Reaktion auf den Nachrichtenerzeugungsbefehl C1' von der Laufzeitfeststellungseinheit 12 Channel-Request-Nachrichten für die empfangsstärksten Trägerfrequenzen bzw. Basisstationen, die im Speicher 16 gespeichert sind. Dies ist sinnvoll, da ein Verbindungsaufbau nicht erforderlich ist. Insbesondere wird so die Anzahl (für die Laufzeitfeststellung bzw. Lokalisierung) verfügbarer Basisstationen erhöht.

Somit wird der Channel Request mit dem Establishment Cause "TA-Measurement" versehen, aber ansonsten in herkömmlicher Weise von dem Modul 14 erzeugt und über die Luftschnittstelle an die Basisstation 2 versendet (gleiches gilt für die Channel Requests zu den zwei weiteren Basisstationen, die nicht in Fig. 1 eingezeichnet sind). In der Fig. 2 wird der Nachrichtenfluss im Vergleich zu dem Verfahren gemäß dem Stand der Technik aus der Fig. 3 weiter veranschaulicht.

Die Basisstation 2 empfängt auf ihrem Frequenzträger die erfindungsgemäß gebildete Channel-Request-Nachricht. Das Nachrichtenauswertungsmodul 20 (vgl. Fig. 1) ist zur Auswertung des Establishment Cause im Hinblick auf die Bitkombination mit der Bedeutung "TA-Measurement" erfindungsgemäß weitergebildet.

In Reaktion auf die Erfassung dieser Bitkombination übersendet das Modul 20 erfindungsgemäß einen Kanalzuweisungsbefehl C3' an das Kanalzuweisungsmodul 24. Diesem Befehl C3' entnimmt das Modul 24 die Angabe, dass ein bestimmter, jedoch fiktiver Kanal zu reservieren ist. In Reaktion auf diesen Befehl C3' greift das Modul 24 auf einen Konstantenspeicher 28 zu, in dem Werte für Kanalparameter dieses fiktiven Kanals als Konstanten, d. h. fest vorgegeben, gespeichert sind. Diese Werte korrespondieren jedoch zu keinem physikalischen Kanal. Insbesondere wird die Reservierung dieses Kanals durch einen Timer mit Zeitablauf null Sekunden überwacht, d. h. der Kanal wird sofort wieder freigegeben und steht in der Folge für weitere Laufzeitfeststellungen anderer oder der gleichen Mobilstation zur Verfügung. Die konstanten Werte aus dem Speicher 28 werden in den Kanalparameter-Speicher 26 eingetragen. Daraufhin wird wie bei dem herkömmlichen Verfahren eine Bestätigungsmeldung A3 an das Modul 20 zurückgesendet. Auf diese Weise braucht zur Implementierung des erfindungsgemäßen Verfahrens nur minimal in die Implementierung des Kanalzuweisungsmoduls 24 eingegriffen werden.

Im weiteren Verlauf wird, ebenfalls wie bei dem herkömmlichen Verfahren, in Reaktion auf den Nachrichtenerzeugungsbefehl C4 durch das Nachrichtenerzeugungsmodul 27 eine Immediate Assignment erstellt, in die die in den Speicher 23 und 26 abgelegten Werte eingefügt werden. Die "Starting Time" wird als optionaler Parameter der Immediate-Assignment-Nachricht vom Nachrichtenerzeugungsmodul 27 weggelassen. Es ist bei dem hier geschilderten Beispiel also nicht notwendig, für die Durchführung des erfindungsgemäßen Verfahrens das Nachrichtenerzeugungsmodul 27 zu modifizieren.

Die Basisstation ist in dem hier geschilderten Ausführungsbeispiel noch in einer weiteren, in Fig. 1 nicht dargestellten Weise modifiziert; sie ist nämlich dazu ausgebildet, eine Unterstützungsinformation an das Mobilfunkendgerät 1 zu übermitteln.

Diese dient der Angabe, dass die Basisstation 2 den Establishment Cause "TA-Measurement" tatsächlich unterstützt. Die betreffende Unterstützungsinformation wird in die "SI3 Rest Octetts" (vgl. 3GPP TS 44 018) eingefügt. Diese werden in der System-Information-3 regelmäßig auf dem BCCH ("Broadcast Control Channel") gesendet. Die Mobilfunkstation 1 muss die System-Information-3 vor jeder Laufzeitmessung mindestens einmal empfangen haben, um die notwendigen Zell- und RACH-Access Parameter für die Kanalanforderung zu erfahren. Für die Übermittlung der Unterstützungsinformation werden die SI3 Rest Octets um ein neues Bit "TA-Measurement supported" (Bitwerte L = "not supported", H = "supported") erweitert.

Sind mehrere Mobilfunkendgeräte in der Zelle der Basisstation 2 jeweils mit einer Immediate-Assignment-Nachricht zu versorgen, so kann auch eine Immediate-Assignment-Extended-Nachricht gemäß GSM-Standard von der Basisstation 2 erzeugt und versendet werden, wie dies dem Fachmann bekannt ist. Für die Erzeugung dieser Nachricht gilt sinngemäß das oben in Bezug auf die Erzeugung der Immediate-Assignment-Nachricht gesagte.

In der Mobilstation 1 hat das Nachrichtenerzeugungsmodul 14 nach Absendung des Channel Request an die Basisstation 2 an das Kanalzuweisungsnachricht-Auswertungsmodul 19 eine interne Benachrichtigung bzw. "Notification" N1' übersendet. Diese enthält wie die herkömmliche Notification N1 die bereits weiter oben erwähnte "Random Reference" der Channel-Request-Nachricht, sowie erfindungsgemäß eine Angabe, dass lediglich eine Laufzeitfeststellung durchzuführen ist, etwa den Wert einer Bool'schen Variable "Verbindungsaufbau". Da nur eine Laufzeitfeststellung durchzuführen ist, ist der Wert der Variable auf "Falsch" gesetzt.

Die Identifizierungskennziffer der Random Reference wird in dem Parameter "Request Reference" der Immediate-Assignment-Nachricht zurückgesendet und dient dem Nachrichtenauswertungsmodul 19 der Zuordnung des Wertes der Variable "Verbindungsaufbau" (und weiterer, bekannter Steuerungsvariablen) zu empfangenen Nachrichten.

Durch den mit der N1' übergebenen Variablenwert "Falsch" wird festgelegt, dass die empfangene Immediate Assignment sich nicht auf einen Verbindungsaufbau bezieht, d.h., dass lediglich der TA-Wert dieser Nachricht von Bedeutung ist. Entsprechend wertet das Modul 19 von der Immediate-Assignment-Nachricht nur die folgenden Parameter aus (vgl. TS 44.018):
- Protocol Discriminator (= RR Management),
- Skip Indicator,
- Message Type (= Immediate Assignment),
- Request Reference und
- Timing Advance.

Alle weiteren ("mandatory" und "conditional") Parameter
- Page Mode,
- Dedicated Mode oder TBF,
- Channel Description oder Packet Channel Description,
- Mobile Allocation und
- IA Rest Octets
werden vom Modul 19 der Mobilstation 1 ignoriert.

Schon vor der Erstellung der Channel-Request-Nachricht wurden im Endgerät 1 die mit einer Sytem-Information-3 von der Basisstation 2 übermittelten SI3 Rest Octets ausgewertet, in denen das Bit "TA-Measurement" gesetzt war (= supported). In Reaktion hierauf wurde durch Zugriff auf den Trägerfrequenzspeicher 16 der dort gespeicherte Frequenzträger der Basisstation 2 derart gekennzeichnet, dass das Nachrichtenerzeugungsmodul 14 bei seinem nächsten Zugriff für eine Laufzeitfeststellung erkennen kann, dass diese Basisstation zur Durchführung des erfindungsgemäßen Verfahrens ausgebildet ist (d.h. eine Laufzeitfeststellung ist mit Hilfe dieser Basisstation in einer Weise durchführbar, bei der die Netzwerkressourcen geschont werden). Das Modul 14 ist dazu ausgebildet, die entsprechend im Trägerfrequenzspeicher 16 gekennzeichneten Basisstationen bevorzugt zur Laufzeitfeststellung heranzuziehen.

Der in der Immediate Assignment enthaltene TA-Wert wird auf herkömmliche Weise durch das Modul 19 entnommen und der Laufzeitfeststellungseinheit 12 übergeben.

Durch die hier beschriebene Einführung eines Establishment Cause "TA-Measurement" in die Channel-Request-Nachricht kann auf einfache Weise verhindert werden, dass bei der TA-Messung unnötigerweise Netzwerkressourcen reserviert werden. Das erfindungsgemäße Verfahren zur Laufzeitfeststellung im Mobilfunkendgerät stellt im Vergleich zu netzwerkbasierten Verfahren oder dem Einsatz von GPS-Empfänger in der Mobilstation eine kostengünstige Alternative dar. Die erzielbare Genauigkeit dieses Verfahrens ist für viele Anwendungen (beispielsweise Location Services) ausreichend.

Ist eine Basisstation nicht zur Durchführung des hier beschriebenen, ressourcenschonenden Verfahrens ausgebildet, könnte sie dazu ausgebildet sein, dieses über das nicht gesetzte TA-Measurement-Bit in der System-Information zu melden, damit Mobilstationen hierauf reagieren können, indem sie etwa für Laufzeitmessungen bevorzugt andere Basisstationen heranziehen oder das nicht ressourcenschonende Verfahren anwenden.

Zahlreiche Abwandlungen von dem hier geschilderten Ausführungsbeispiel sind dem Fachmann offensichtlich. So ist ein ganz anderer funktionaler Aufbau der Basisstation denkbar, bei der etwa eine zentrale Steuereinheit diverse Module steuert. Gleiches gilt auch für das Mobilfunkendgerät. Das geschilderte Ausführungsbeispiel gibt lediglich eine von vielen Möglichkeiten wieder, wie das erfindungsgemäße Verfahren mit minimalen Änderungen an Basisstation und Mobilfunkendgerät implementiert werden kann, um so wesentliche Ressourceneinsparungen im Netzwerk zu erzielen. Der Geltungsbereich der Erfindung wird ausschließlich durch die nachfolgenden Ansprüche angegeben.

## Patentansprüche

1. Verfahren zur Feststellung einer Signallaufzeit zwischen einem Mobilfunkendgerät (1) und einer Basisstation (2) eines Mobilfunknetzes im Mobilfunkendgerät (1), bei dem
- eine Kanalanforderungsnachricht vom Mobilfunkendgerät (1) erzeugt und an die Basisstation (2)gesendet wird, wobei die Kanalanforderungsnachricht dafür vorgesehen ist, für den Aufbau einer Verbindung die Basisstation (2) zu veranlassen, einen Kanal für die Übermittlung von weiteren Nachrichten zu bestimmen und diesen Kanal zu reservieren,
- in Reaktion auf die Kanalanforderungsnachricht in der Basisstation (2) die Signallaufzeit erfasst wird, um für den weiteren Verbindungsaufbau eine Synchronisierung des Mobilfunkendgerätes (1) auf das Zeitschlitzraster der Basisstation (2) zu ermöglichen,
- eine Kanalzuweisungsnachricht von der Basisstation (2) erzeugt und an das Mobilfunkendgerät (1) gesendet wird, die dafür vorgesehen ist, die Werte von Kanalparametern des reservierten Kanals anzugeben, und in welcher der Wert der Signallaufzeit angegeben ist,
**dadurch gekennzeichnet, dass**
vom Mobilfunkendgerät (1) eine Laufzeitfeststellungsinformation in die Kanalanforderungsnachricht eingefügt wird, um der Basisstation (2) über die Kanalanforderungsnachricht zu signalisieren, dass keine Kanalreservierung, sondern nur eine Laufzeitfeststellung durchzuführen ist.

2. Verfahren nach Anspruch 1,
**dadurch gekennzeichnet, dass**
die Kanalanforderungsnachricht von der Basisstation (2) auf ein Vorliegen der Laufzeitfeststellungsinformation hin ausgewertet wird, wobei in Reaktion auf ein positives Auswertungsergebnis von der Basisstation (2) kein Kanal reserviert wird.

3. Verfahren nach Anspruch 1 oder 2,
**dadurch gekennzeichnet, dass**
die Laufzeitfeststellungsinformation als vorgegebener Parameterwert eines Parameters der Kanalanforderungsnachricht eingefügt wird, wobei der Parameter mindestens einen weiteren Wert annehmen kann, der sich nicht auf die Laufzeitinformation bezieht.

4. Verfahren nach Anspruch 3,
**dadurch gekennzeichnet, dass**
der Parameter der Kanalanforderungsnachricht von der Basisstation (2) ausgewertet wird, um die Art des zu reservierenden Kanals zu bestimmen.

5. Verfahren nach einem der vorhergehenden Ansprüche,
**dadurch gekennzeichnet, dass**
durch das Mobilfunkendgerät (1) der Wert der Signallaufzeit aus der Kanalzuweisungsnachricht entnommen wird, nicht jedoch die Werte der Kanalparameter.

6. Verfahren nach einem der vorhergehenden Ansprüche,
**dadurch gekennzeichnet, dass**
durch die Basisstation (2) Kanalparameter mit zufälligen oder in der Basisstation (2) fest vorgegebenen Werten in die Kanalzuweisungsnachricht eingefügt werden.

7. Verfahren nach einem der vorhergehenden Ansprüche,
**dadurch gekennzeichnet, dass**
bei der Auswahl der oder jeder Basisstation (2), an welche die Kanalanforderungsnachricht gesendet wird, die im Mobilfunkendgerät (1) implementierten Zell- und/oder Netz-Auswahlkriterien nicht herangezogen werden.

8. Verfahren nach einem der vorhergehenden Ansprüche,
**dadurch gekennzeichnet, dass**
die Basisstation (2) eine Unterstützungsinformation an das Mobilfunkendgerät (1) übermittelt, die angibt, dass die Basisstation (2) ausgebildet ist, um nur eine Laufzeiterfassung ohne Kanalreservierung durchzuführen.

9. Mobilfunkendgerät (1) mit
- einer Verbindungsaufbaueinheit (10) zum Aufbau einer Verbindung über eine Basisstation (2) eines Mobilfunknetzes,
- einer Laufzeitfeststellungseinheit (12) zur Feststellung einer Signallaufzeit zwischen dem Mobilfunkendgerät (1) und der oder jeder Basisstation (2),
- einem Trägerfrequenzspeicher (16) zum Speichern einer Liste von Trägerfrequenzen, die im eingeschalteten Zustand des Mobilfunkendgerätes (1) ermittelt werden, wobei jeder Trägerfrequenz eine Basisstation (2) zugeordnet ist und die Trägerfrequenzen nach abnehmender Empfangsstärke am Ort des Mobilfunkendgerätes (1) geordnet sind,
- einem Kanalanforderungsnachricht-Erzeugungsmodul (14) zum Erzeugen einer Kanalanforderungsnachricht für die an erster Stelle in dem Trägerfrequenzspeicher (16) gespeicherte Basisstation (2) in Reaktion auf einen Nachrichtenerzeugungsbefehl von der Verbindungsaufbaueinheit (10, C1) oder der Laufzeitfeststellungseinheit (12, C1') und
- einem Kanalzuweisungsnachricht-Auswertungsmodul (19) zum Auswerten von Kanalzuweisungsnachrichten, wobei der Wert der Signallaufzeit entnommen und an die Laufzeitfeststellungseinheit (12) weitergeleitet wird und die Werte der Kanalparameter entnommen und an die Verbindungsaufbaueinheit weitergeleitet werden,
**dadurch gekennzeichnet, dass**
das Kanalanforderungsnachricht-Erzeugungsmodul ausgebildet ist, um in Reaktion auf den Nachrichtenerzeugungsbefehl (C1') von der Laufzeitfeststellungseinheit (12) eine Laufzeitfeststellungsinformation in die Kanalanforderungsnachricht einzufügen, um der oder jeder Basisstation (2) zu signalisieren, dass keine Kanalreservierung, sondern nur eine Laufzeitfeststellung durchzuführen ist.

10. Mobilfunkendgerät (1) nach Anspruch 9,
**dadurch gekennzeichnet, dass**
das Kanalzuweisungsnachricht-Auswertungsmodul (19) ausgebildet ist, um in Reaktion auf einen Nachrichtenauswertungsbefehl (N1') aus der Kanalzuweisungsnachricht nur den Wert der Signallaufzeit zu entnehmen und die Werte der Kanalparameter zu ignorieren.

11. Mobilfunkendgerät (1) nach Anspruch 9 oder 10,
**dadurch gekennzeichnet, dass**
das Kanalanforderungsnachricht-Erzeugungsmodul (14) ausgebildet ist, jeweils eine Kanalanforderungsnachricht an eine Mehrzahl von Basisstationen zu erzeugen und zu senden, deren Trägerfrequenzen in dem Trägerfrequenzspeicher (16) gespeichert sind und zu denen ein Verbindungsaufbau nach den im Mobilfunkendgerät (1) implementierten Zell- und/oder Netz-Auswahlkriterien gemäß verwendetem Mobilfunkstandard nicht zugelassen ist.

12. Mobilfunkendgerät (1) nach einem der Ansprüche 9 bis 11,
**dadurch gekennzeichnet, dass**
das Mobilfunkendgerät (1) ausgebildet ist, eine Unterstützungsinformation, die angibt, ob die Basisstation (2) ausgebildet ist, um nur eine Laufzeiterfassung ohne Kanalreservierung durchzuführen, auszulesen und abzuspeichern, insbesondere im Trägerfrequenzspeicher (16) in Zuordnung zu der entsprechenden Trägerfrequenz.

13. Basisstation (2) mit
- einem Kanalanforderungsnachricht-Auswertungsmodul (20), das zur Erzeugung eines Signallaufzeit-Messbefehls (C2) und eines Kanalzuweisungsbefehls (C3) in Reaktion auf eine Auswertung einer Kanalanforderungsnachricht ausgebildet ist,
- einem Signallaufzeit-Messmodul (22), das in Reaktion auf den Signallaufzeit-Messbefehl (C2) des Kanalanforderungs-Nachrichtenauswertungsmoduls (20) den Wert einer Signallaufzeit zwischen einem Mobilfunkendgerät (1), von welchem die Kanalanforderungsnachricht empfangen worden ist, und der Basisstation (2) erfasst und den Wert der Signallaufzeit in einem Signallaufzeit-Speicher (23) speichert,
- einem Kanalzuweisungsmodul (24), das in Reaktion auf den Kanalzuweisungsbefehl (C3) des Kanalanforderungsnachricht-Auswertungsmoduls (20) für den Verbindungsaufbau zwischen Basisstation (2) und Mobilfunkendgerät (1) einen physikalischen Kanal bestimmt und in einen Kanalbelegungsspeicher (25) reserviert und Werte von Kanalparametern des reservierten Kanals in einem Kanalparameter-Speicher (26) speichert,
- einem Kanalzuweisungsnachricht-Erzeugungsmodul (27), das ausgebildet ist, um in Reaktion auf die Bereitstellung des Wertes der Signallaufzeit und der Werte der Kanalparameter des reservierten Kanals eine Kanalzuweisungsnachricht zu erzeugen, die den Wert der Signallaufzeit und die Werte der Kanalparameter des reservierten Kanals enthält, die aus dem Signallaufzeit-Speicher (23) und dem Kanalparameter-Speicher (26) entnommen wurden,
**dadurch gekennzeichnet, dass**
das Kanalzuweisungsmodul (24) ausgebildet ist, in Reaktion auf eine Auswertung in dem Kanalanforderungsnachricht-Auswertungsmodul (20) von einer solchen Kanalanforderungsnachricht, die eine Laufzeitfeststellungsinformation enthält, keine Reservierung eines physikalischen Kanals in dem Kanalbelegungsspeicher (25) vorzunehmen, wobei die Laufzeitfeststellungsinformation angibt, dass keine Kanalreservierung, sondern nur eine Laufzeitfeststellung durchzuführen ist.

14. Basisstation (2) nach Anspruch 13,
**dadurch gekennzeichnet, dass**
die Basisstation (2) ausgebildet ist, um eine Unterstützungsinformation an das oder jedes Mobilfunkendgerät (1) zu übermitteln, wobei die Unterstützungsinformation angibt, dass die Basisstation (2) für die Auswertung von Kanalanforderungsnachrichten auf ein Vorliegen der Laufzeitfeststellungsinformation hin ausgebildet ist.

## Claims

1. Method for detecting a signal propagation time between a mobile radio terminal (1) and a base station (2) in a mobile radio network in the mobile radio terminal (1), in which
- a channel request message is generated by the mobile radio terminal (1) and is sent to the base station (2), the channel request message being provided in order to prompt the base station (2) to determine a channel for transmitting further messages and to reserve this channel in order to set up a connection,
- in response to the channel request message, the base station (2) records the signal propagation time to allow the mobile radio terminal (1) to be synchronized to the timeslot pattern in the base station (2) in order to continue connection setup,
- a channel allocation message is generated by the base station (2) and is sent to the mobile radio terminal (1), said channel allocation message being provided in order to indicate the values of channel parameters for the reserved channel and indicating the value of the signal propagation time,
**characterized in that**
the mobile radio terminal (1) inserts a propagation time detection information item into the channel request message in order to use the channel request message to signal to the base station (2) that no channel reservation but only propagation time detection needs to be carried out.

2. Method according to Claim 1,
**characterized in that**
the channel request message is evaluated by the base station (2) to ascertain whether the propagation time detection information item is present, and in response to a positive evaluation result the base station (2) does not reserve a channel.

3. Method according to Claim 1 or 2,
**characterized in that**
the propagation time detection information item is inserted as a prescribed parameter value for a parameter of the channel request message, and the parameter may assume at least one further value which does not relate to the propagation time information item.

4. Method according to Claim 3,
**characterized in that**
the parameter of the channel request message is evaluated by the base station (2) in order to determine the type of channel which is to be reserved.

5. Method according to one of the preceding claims,
**characterized in that**
the mobile radio terminal (1) takes the value of the signal propagation time from the channel allocation message, but not the values of the channel parameters.

6. Method according to one of the preceding claims,
**characterized in that**
the base station (2) inserts channel parameters with random values or with values firmly prescribed in the base station (2) into the channel allocation message.

7. Method according to one of the preceding claims,
**characterized in that**
the selection of the or each base station (2) to which the channel request message is sent does not involve the use of the cell and/or network selection criteria implemented in the mobile radio terminal (1).

8. Method according to one of the preceding claims,
**characterized in that**
the base station (2) transmits a supporting information item to the mobile radio terminal (1) which indicates that the base station (2) is designed to perform only propagation time recording without channel reservation.

9. Mobile radio terminal (1) having
- a connection setup unit (10) for setting up a connection via a base station (2) in a mobile radio network,
- a propagation time detection unit (12) for detecting a signal propagation time between the mobile radio terminal (1) and the or each base station (2),
- a carrier frequency memory (16) for storing a list of carrier frequencies which are ascertained when the mobile radio terminal (1) is in the turned-on state, each carrier frequency having an associated base station (2) and the carrier frequencies being organized according to decreasing reception strength at the location of the mobile radio terminal (1),
- a channel request message generation module (14) for generating a channel request message for the base station (2) stored at the first position in the carrier frequency memory (16) in response to a message generation command from the connection setup unit (10, C1) or from the propagation time detection unit (12, C1'), and
- a channel allocation message evaluation module (19) for evaluating channel allocation messages, the value of the signal propagation time being taken and forwarded to the propagation time detection unit (12) and the values of the channel parameters being taken and forwarded to the connection setup unit,
**characterized in that**
the channel request message generation module is designed to insert a propagation time detection information item into the channel request message in response to the message generation command (C1') from the propagation time detection unit (12) in order to signal to the or each base station (2) that no channel reservation but only propagation time detection needs to be carried out.

10. Mobile radio terminal (1) according to Claim 9,
**characterized in that**
the channel allocation message evaluation module (19) is designed to take only the value of the signal propagation time from the channel allocation message in response to a message evaluation command (N1') and to ignore the values of the channel parameters.

11. Mobile radio terminal (1) according to Claim 9 or 10,
**characterized in that**
the channel request message generation module (14) is designed to generate and send a respective channel request message to a plurality of base stations whose carrier frequencies are stored in the carrier frequency memory (16) and to which it is not permissible to set up a connection according to the cell and/or network selection criteria implemented in the mobile radio terminal (1) on the basis of the mobile radio standard used.

12. Mobile radio terminal (1) according to one of Claims 9 to 11,
**characterized in that**
the mobile radio terminal (1) is designed to read and store a supporting information item indicating whether the base station (2) is designed to perform just propagation time detection without channel reservation, particularly in the carrier frequency memory (16) in association with the appropriate carrier frequency.

13. Base station (2) having
- a channel request message evaluation module (20) which is designed to generate a signal propagation time measurement command (C2) and a channel allocation command (C3) in response to evaluation of a channel request message,
- a signal propagation time measurement module (22) which records the value of a signal propagation time between a mobile radio terminal (1), from which the channel request message has been received, and the base station (2) in response to the signal propagation time measurement command (C2) from the channel request message evaluation module (20) and stores the value of the signal propagation time in a signal propagation time memory (23),
- a channel allocation module (24) which determines a physical channel for the connection setup between the base station (2) and the mobile radio terminal (1) in response to the channel allocation command (C3) from the channel request message evaluation module (20) and reserves it in a channel use memory (25) and stores values for channel parameters of the reserved channel in a channel parameter memory (26),
- a channel allocation message generation module (27) which is designed to generate a channel allocation message in response to the provision of the value of the signal propagation time and the values of the channel parameters of the reserved channel, said channel allocation message containing the value of the signal propagation time and the values of the channel parameters of the reserved channel which have been taken from the signal propagation time memory (23) and the channel parameter memory (26),
**characterized in that**
the channel allocation module (24) is designed not to reserve a physical channel in the channel use memory (25) in response to evaluation in the channel request message evaluation module (20) of a channel request message which contains a propagation time detection information item, the propagation time detection information item indicating that no channel reservation but only propagation time detection needs to be carried out.

14. Base station (2) according to Claim 13,
**characterized in that**
the base station (2) is designed to transmit a supporting information item to the or each mobile radio terminal (1), the supporting information item indicating that the base station (2) is designed to evaluate channel request messages to determine whether the propagation time detection information item is present.

## Revendications

1. Procédé de détermination d'un temps de propagation de signal entre un terminal de téléphonie mobile (1) et une station de base (2) d'un réseau de téléphonie mobile dans le terminal de téléphonie mobile (1), dans lequel
- le terminal de téléphonie mobile (1) produit un message de demande de canal et l'envoie à la station de base (2), le message de demande de canal étant prévu pour que, en vue de l'établissement d'une liaison, la station de base (2) détermine un canal pour la transmission d'autres messages et réserve ce canal,
- en réaction au message de demande de canal, dans la station de base (2), on détecte le temps de propagation de signal pour permettre en vue de la suite de l'établissement de liaison une synchronisation du terminal de téléphonie mobile (1) sur la trame de créneaux temporels de la station de base (2),
- la station de base (2) produit un message d'attribution de canal et l'envoie au terminal de téléphonie mobile (1), lequel message est prévu pour indiquer les valeurs de paramètres du canal réservé et contient la valeur du temps de propagation de signal,
**caractérisé par le fait que** le terminal de téléphonie mobile (1) insère une information de détermination de temps de propagation dans le message de demande de canal pour signaler à la station de base (2), par l'intermédiaire du message de demande de canal, qu'aucune réservation de canal n'est à effectuer mais seulement une détermination de temps de

2. Procédé selon la revendication 1,
**caractérisé par le fait que** le message de demande de canal est évalué par la station de base (2) pour vérifier la présence de l'information de détermination de temps de propagation, aucun canal n'étant réservé par la station de base (2) en réaction à un résultat d'évaluation positif.

3. Procédé selon la revendication 1 ou 2,
**caractérisé par le fait que** l'information de détermination de temps de propagation est insérée comme une valeur prédéterminée d'un paramètre du message de demande de canal, le paramètre pouvant prendre au moins une autre valeur qui ne se rapporte pas à l'information de temps de propagation.

4. Procédé selon la revendication 3,
**caractérisé par le fait que** le paramètre du message de demande de canal est évalué par la station de base (2) pour déterminer le type du canal à réserver.

5. Procédé selon l'une des revendications précédentes,
**caractérisé par le fait que** le terminal de téléphonie mobile (1) extrait du message d'attribution de canal la valeur du temps de propagation de signal mais pas les valeurs des paramètres de canal.

6. Procédé selon l'une des revendications précédentes,
**caractérisé par le fait que** la station de base (2) insère dans le message d'attribution de canal des paramètres de canal ayant des valeurs aléatoires ou prescrites dans la station de base (2).

7. Procédé selon l'une des revendications précédentes,
**caractérisé par le fait que,** lors de la sélection de la station de base ou de chaque station de base (2) à laquelle le message de demande de canal est envoyé, les critères de sélection de cellule et/ou de réseau qui sont implantés dans le terminal de téléphonie mobile (1) ne sont pas exploités.

8. Procédé selon l'une des revendications précédentes,
**caractérisé par le fait que** la station de base (2) transmet au terminal de téléphonie mobile (1) une information de support qui indique que la station de base (2) est conçue pour effectuer seulement une détection de temps de propagation sans réservation de canal.

9. Terminal de téléphonie mobile (1) comportant
- une unité d'établissement de liaison (10) pour l'établissement d'une liaison par l'intermédiaire d'une station de base (2) d'un réseau de téléphonie mobile,
- une unité de détermination de temps de propagation (12) pour la détermination d'un temps de propagation de signal entre le terminal de téléphonie mobile (1) et la ou chaque station de base (2),
- une mémoire de fréquences porteuses (16) pour la mémorisation d'une liste de fréquences porteuses qui sont déterminées dans l'état de marche du terminal de téléphonie mobile (1), une station de base (2) étant associée à chaque fréquence porteuse et les fréquences porteuses étant triées dans l'ordre décroissant de l'intensité de réception à l'endroit où se trouve le terminal de téléphonie mobile (1),
- un module de production de message de demande de canal (14) pour la production d'un message de demande de canal pour la station de base (2) mémorisée à la première place dans la mémoire de fréquences porteuses (16) en réaction à une instruction de production de message issue de l'unité d'établissement de liaison (10, C1) ou de l'unité de détermination de temps de propagation (12, C1'), et
- un module d'évaluation de message d'attribution de canal (19) pour l'évaluation de messages d'attribution de canal, la valeur du temps de propagation de signal étant extraite et retransmise à l'unité de détermination de temps de propagation (12) et les valeurs des paramètres de canal étant extraites et retransmises à l'unité d'établissement de liaison,
**caractérisé par le fait que** le module de production de message de demande de canal est conçu pour, en réaction à l'instruction de production de message (C1') issue de l'unité de détermination de temps de propagation (12), insérer une information de détermination de temps de propagation dans le message de demande de canal afin de signaler à la ou chaque station de base (2) qu'aucune réservation de canal n'est à effectuer mais seulement une détermination de temps de propagation.

10. Terminal de téléphonie mobile (1) selon la revendication 9,
**caractérisé par le fait que** le module d'évaluation de message d'attribution de canal (19) est conçu pour, en réaction à une instruction d'évaluation de message (N1'), extraire du message d'attribution de canal seulement la valeur du temps de propagation de signal et ignorer les valeurs des paramètres de canal.

11. Terminal de téléphonie mobile (1) selon la revendication 9 ou 10,
**caractérisé par le fait que** le module de production de message de demande de canal (14) est conçu pour produire à chaque fois un message de demande de canal et pour l'envoyer à plusieurs stations de base dont les fréquences porteuses sont mémorisées dans la mémoire de fréquences porteuses (16) et vers lesquelles un établissement de liaison selon les critères de sélection de cellule et/ou de réseau implantés dans le terminal de téléphonie mobile (1) n'est pas autorisé suivant le standard de téléphonie mobile utilisé.

12. Terminal de téléphonie mobile (1) selon l'une des revendications 9 à 11,
**caractérisé par le fait que** le terminal de téléphonie mobile (1) est conçu en vue de lire une information de support qui indique si la station de base (2) est conçue pour effectuer seulement une détection de temps de propagation sans réservation de canal et de mémoriser ladite information de support, notamment dans la mémoire de fréquences porteuses (16) en relation avec la fréquence porteuse correspondante.

13. Station de base (2) comportant
- un module d'évaluation de message de demande de canal (20) qui est conçu pour la production d'une instruction de mesure de temps de propagation de signal (C2) et d'une instruction d'attribution de canal (C3) en réaction à une évaluation d'un message de demande de canal,
- un module de mesure de temps de propagation de signal (22) qui détecte en réaction à l'instruction de mesure de temps de propagation de signal (C2) du module d'évaluation de message de demande de canal (20) la valeur d'un temps de propagation de signal entre un terminal de téléphonie mobile (1) duquel le message de demande de canal a été reçu et la station de base (2) et qui mémorise la valeur du temps de propagation de signal dans une mémoire de temps de propagation de signal (23),
- un module d'attribution de canal (24) qui, en réaction à l'instruction d'attribution de canal (C3) du module d'évaluation de message de demande de canal (20), détermine un canal physique pour l'établissement de liaison entre station de base (2) et terminal de téléphonie mobile (1) et le réserve dans une mémoire d'occupation de canal (25) et qui mémorise des valeurs de paramètres du canal réservé dans une mémoire de paramètres de canal (26),
- un module de production de message d'attribution de canal (27) qui est conçu pour, en réaction à la mise à disposition de la valeur du temps de propagation de signal et des valeurs des paramètres du canal réservé, produire un message d'attribution de canal qui contient la valeur du temps de propagation de signal et les valeurs des paramètres du canal réservé qui ont été extraits de la mémoire de temps de propagation de signal (23) et de la mémoire de paramètres de canal (26),
**caractérisée par le fait que** le module d'attribution de canal (24) est conçu pour, en réaction à une évaluation effectuée dans le module d'évaluation de message de demande de canal (20) et portant sur un message de demande de canal qui contient une information de détermination de temps de propagation, ne pas effectuer de réservation d'un canal physique dans la mémoire d'occupation de canal (25), l'information de détermination de temps de propagation indiquant qu'aucune réservation de canal n'est à effectuer mais seulement une détermination de temps de propagation.

14. Station de base (2) selon la revendication 13,
**caractérisée par le fait que** la station de base (2) est conçue pour transmettre une information de support au terminal de téléphonie mobile ou à chaque terminal de téléphonie mobile (1), l'information de support indiquant que la station de base (2) est conçue pour l'évaluation de messages de demande de canal visant à vérifier la présence de l'information de détermination de temps de propagation.
